# EUROPÄISCHE PATENTANMELDUNG

(11) **EP 4 446 911 A1**
(43) Veröffentlichungstag der Anmeldung: **16.10.2024**
(21) Anmeldenummer: 24168894.4
(22) Anmeldetag: 08.04.2024
(51) Int. Cl.: G06F 18/2431, G06T 7/00, G06V 10/80, G06V 20/69

(54) **LICHTMIKROSKOPISCHES VERFAHREN, VORRICHTUNG UND COMPUTERPROGRAMMPRODUKT**

(30) Priorität: 11.04.2023 DE 102023109107
(71) Anmelder: Abberior Instruments GmbH, 37077 Göttingen (DE)
(72) Erfinder: HEINE, Jörn, 37213 Witzenhausen (DE); REUSS, Matthias, 37083 Göttingen (DE)

(57) **Zusammenfassung**

Die Erfindung betrifft ein lichtmikroskopisches Verfahren, umfassend das Aufnehmen von ersten lichtmikroskopischen Daten (17) einer Probe (2) in einem ersten Aufnahmemodus, das Erkennen eines Objekts (13) in der Probe (2) aus den ersten lichtmikroskopischen Daten (17) und Zuordnen des Objekts (13) zu einer Objektklasse (14a, 14b) mit einem ersten Künstliche-Intelligenz-Verfahren, das Aufnehmen von zweiten lichtmikroskopischen Daten (18) in einem zweiten Aufnahmemodus und das Zuordnen des Objekts (13) zu einer Unterkategorie (15a, 15b, 15c) der Objektklasse (14a,14b) auf Basis der zweiten lichtmikroskopischen Daten (18) mit dem ersten Künstliche-Intelligenz-Verfahren oder einem zweiten Künstliche-Intelligenz-Verfahren sowie ein Computerprogrammprodukt und eine Vorrichtung (1) mit einem Lichtmikroskop (100) zur Durchführung des Verfahrens.

## Beschreibung

### Technisches Gebiet der Erfindung

Die Erfindung betrifft ein lichtmikroskopisches Verfahren, bei dem Objekte in einer Probe mithilfe von Künstliche-Intelligenz-Verfahren automatisch klassifiziert werden sowie eine Vorrichtung und ein Computerprogrammprodukt, mit denen das Verfahren durchführbar ist.

### Stand der Technik

Aus dem Stand der Technik sind verschiedene Künstliche-Intelligenz-Verfahren bekannt, mit denen es unter Anderem möglich ist, Eingangsdaten oder Eingangssignale automatisch zu klassifizieren.

Für die Klassifizierung von Bilddaten eignen sich besonders gut sogenannte Deep-Learning-Verfahren. Deep-Learning-Verfahren gehören zu den sogenannten Representation-Learning-Verfahren, d.h., sie sind in der Lage, aus annotierten Rohdaten zu lernen. Zusätzlich zeichnen sich Deep-Learning-Verfahren dadurch aus, dass Repräsentationen der Daten in verschiedenen Schichten gebildet werden.

Einen Überblick über Deep-Learning-Verfahren, insbesondere neuronale Netzwerke, gibt beispielsweise die Veröffentlichung "Deep Learning" von Y. LeCun, Y. Bengio und G. Hinton, Nature 521 (2015), 436-444.

Künstliche Neuronale Netze (*artificial neural networks,* ANN) sind Datenverarbeitungsnetze, welche insbesondere Strukturen im tierischen und menschlichen Gehirn schematisch nachbilden können. Sie bestehen aus Verarbeitungsknoten, die in einer Eingangsschicht (*input layer*), einer Ausgangsschicht (*output layer*) und typischerweise einer Vielzahl zwischen der Eingangsschicht und der Ausgangsschicht angeordneter versteckter Schichten (*hidden layers*) organisiert sind. Jeder Knoten erhält Eingangsdaten, verarbeitet diese mit einer nichtlinearen Funktion und gibt Ausgangsdaten an nachfolgende Knoten aus. Die Knoten der Eingangsschicht erhalten dabei Eingangsdaten (Trainingsdaten oder Testdaten). Die Knoten der versteckten Schichten und der Ausgangsschicht erhalten typischerweise die Ausgangsdaten von mehreren Knoten der jeweils in Datenflussrichtung vorhergehenden Schicht. Dabei sind für alle Verbindungen zwischen Knoten (zumindest implizit) Gewichte definiert, d.h. relative Anteile, mit denen die Eingangsdaten bei der Verarbeitung mit der nichtlinearen Funktion berücksichtigt werden. Ein Netzwerk kann auf eine bestimmte Aufgabe, z.B. die Segmentierung oder Klassifizierung von Bilddaten, trainiert werden, indem Trainingsdaten von dem Netzwerk verarbeitet werden, auf das Ergebnis eine Fehlerfunktion angewendet wird, deren Wert die Übereinstimmung des ermittelten Ergebnisses mit dem korrekten Ergebnis widerspiegelt, und auf Basis der Fehlerfunktion die Gewichte zwischen den Knoten angepasst werden. Dazu kann z.B. mit einer sogenannten Rückpropagation für jedes Gewicht ein Gradient der Fehlerfunktion ermittelt werden, und die Gewichte können auf Basis des steilsten Verlaufs des Gradienten angepasst werden.

Neuronale Faltungsnetze (*convolutional neural networks,* CNN) sind eine Untergruppe der neuronalen Netze, die sogenannte Faltungsschichten enthalten, denen typischerweise Pooling-Schichten nachgeordnet sind. Bei Faltungsschichten kann die Datenübertragung zwischen zwei Schichten durch eine Faltungsmatrix (auch *kernel* oder *filter bank* genannt) repräsentiert werden, d.h. jeder Eingangsknoten erhält als Eingangsdaten das innere Produkt zwischen den Ausgangsdaten eines Teils der Knoten der vorherigen Schicht mit der Faltungsmatrix. Beim sogenannten Pooling werden die Ausgangsdaten einer Schicht in eine Schicht mit einer geringeren Anzahl von Knoten übertragen, wobei jeweils die Ausgangsdaten mehrerer Knoten miteinander verrechnet werden.

Solche neuronalen Faltungsnetze sind insbesondere in der Bildverarbeitung vorteilhaft, da durch die Faltungsschichten die Erkennung lokaler Strukturen und die Verschiebungsinvarianz stark verbessert werden.

Im Bereich der Bildbearbeitung von mikroskopischen Daten wurden Künstliche-Intelligenz-Verfahren, insbesondere künstliche neuronale Netze, bereits für eine Vielzahl von Aufgaben eingesetzt, beispielsweise für die Segmentierung von Bilddaten (siehe z.B. "Best Practices in Deep-Learning-Based Segmentation of Microscopy Images" von T. Scherr, A. Bartschat, M. Reischl, J. Stegmaier und R. Mikut (Proc. 28 Workshop Computational Intelligence, Dortmund, 29.-30.11.2018, 175-195).

US 7,088,854 B2 beschreibt ein Computerprogrammprodukt und ein Verfahren zur Erzeugung von Bildanalyse-Algorithmen, insbesondere basierend auf künstlichen neuronalen Netzen. Dabei wird ein Bild mit chromatischen Datenpunkten erhalten (insbesondere von einem Mikroskop) und es wird ein evolvierender Algorithmus erzeugt, der die chromatischen Datenpunkte auf Basis einer vorherigen Nutzerbewertung in Objekte aufteilt, wobei der Algorithmus anschließend zur automatischen Klassifizierung von Objekten verwendet werden kann.

In US 2010/0111396 A1 ist ein Verfahren zur Analyse von Bildern biologischen Gewebes beschrieben, bei dem biologische Objekte Pixel für Pixel klassifiziert werden, und die identifizierten Klassen segmentiert werden, um identifizierte Pixel in segmentierte Regionen zu agglomerieren. Mit dem Verfahren können z.B. Zellkerne von Krebszellen und Nicht-Krebszellen unterschieden werden.

Die Patentanmeldung US 2015/0213302 A1 beschäftigt sich ebenfalls mit der Krebsdiagnostik durch künstliche Intelligenz. Bei der beschriebenen Methode wird ein Künstliches Neuronales Netz mit einem Klassifizierungsalgorithmus kombiniert, der auf von Hand extrahierten Merkmalen beruht. Z.B. mit einem Mikroskop wird ein Bild einer biologischen Gewebeprobe aufgenommen und segmentiert, um einen Kandidaten-Mitose-Patch zu erhalten. Dieser wird dann mit dem neuronalen Netz und anschließend mit dem Klassifizierungsalgorithmus klassifiziert. Der Kandidaten-Patch wird dann auf Basis beider Klassifizierungsergebnisse als mitotisch oder nicht mitotisch eingeordnet. Die Ergebnisse können von einem automatischen Krebs-Einstufungssystem verwendet werden.

Aus der WO 2019/229151 A2 ist ein Verfahren zum Scannen von Teilbereichen mittels eines Rastermikroskops, insbesondere eines Laserscanning-Mikroskops, bekannt. Bei dem Verfahren werden zunächst mithilfe eines Künstliche-Intelligenz-Systems aus einem Übersichtsbild zu scannende Bereiche ausgewählt und die ausgewählten Bereiche werden mit dem Rastermikroskop scannend abgebildet. Anschließend wird ein Gesamtbild berechnet, wobei die nicht-gescannten Bereiche aus den gescannten Bereichen geschätzt werden.

Ein ähnliches Verfahren aus dem Bereich der Elektronenmikroskopie ist aus der US 2019/0187079 A1 bekannt. Mit einem Rasterelektronenmikroskop wird zunächst ein erster Scan einer interessierenden Region der Probe durchgeführt. Anschließend werden Teilbereiche dieser interessierenden Region mit angepassten Parametern in einer zuvor optimierten Reihenfolge gescannt.

In der EP 3 734 515 A1 ist ein Verfahren zum Steuern eines autonomen Weitfeld-Lichtmikroskopsystems beschrieben. Dabei werden künstliche neuronale Netze zur Erkennung von Strukturen in der Probe verwendet, die mittels Verstärkungslernen trainiert sind. Zunächst wird mit einem ersten Objektiv ein Bild niedriger Vergrößerung aufgenommen. Auf Basis dieses Bildes wird von einem ersten trainierten künstlichen neuronalen Netz eine interessierende Region der Probe automatisch ausgewählt. Anschließend wird mit einem zweiten Objektiv ein Bild der interessierenden Region mit höherer Vergrößerung aufgenommen. Ein zweites trainiertes künstliches neuronales Netz identifiziert dann ein Zielmerkmal in dem höher vergrößerten Bild und erzeugt ein statistisches Ergebnis. Basierend auf dem statistischen Ergebnis wird ein Rückkopplungssignal für das erste künstliche neuronale Netz generiert. Diese Methode zielt darauf ab, bereits die Auswahl der interessierenden Region in der Probe aus dem Bild niedriger Vergrößerung so durchzuführen, dass in dem Bild höherer Vergrößerung später das Zielmerkmal identifiziert werden kann.

Ein solches Mikroskopsystem ist für das zeitoptimierte Erkennen eines Zielmerkmals in einer größeren Probe optimiert, beispielsweise zur Erkennung von Tumorzellen in einem Gewebeschnitt und Klassifizierung des entsprechenden Gewebes als Tumorgewebe.

Beim manchen automatisierten Screening-Aufgaben ergibt sich jedoch das Problem, dass in interessierenden Regionen eine Vielzahl von, insbesondere morphologisch sehr ähnlichen, Objekten auftreten, von denen nur eine bestimmte Untermenge auf das Vorhandensein eines bestimmten Zielmerkmals untersucht werden soll. Beispielsweise kann eine Probe biologische Zellen in unterschiedlichen Wachstumsstadien enthalten, wobei etwa die Expression eines Marker-Proteins (hier das Zielmerkmal) von einem Kandidaten-Wirkstoff nur in einem bestimmten Wachstumsstadium induziert wird. Dies ist besonders problematisch, wenn die interessierende Untermenge nur einen sehr geringen Anteil der Gesamtzahl der Objekte in der Probe umfasst.

### Aufgabe der Erfindung

Die Aufgabe der vorliegenden Erfindung besteht daher darin, ein lichtmikroskopisches Verfahren sowie eine Vorrichtung und ein Computerprogrammprodukt zu dessen Durchführung zur Verfügung zu stellen, das geeignet ist, Objekte einer Kategorie in einer Probe automatisch zu erkennen und eine Teilmenge von Objekten einer Unterkategorie automatisch zu identifizieren.

### Lösung

Diese Aufgabe wird durch den Gegenstand der unabhängigen Ansprüche 1 (Verfahren), 14 (Vorrichtung) und 15 (Computerprogrammprodukt) gelöst. Vorteilhafte Ausführungsformen der Erfindung sind in den Unteransprüchen 2 bis 13 angegeben und werden im Folgenden beschrieben.

### Beschreibung der Erfindung

Ein erster Aspekt der Erfindung betrifft ein lichtmikroskopisches Verfahren, umfassend die folgenden Schritte: Aufnehmen von ersten lichtmikroskopischen Daten einer Probe in einem ersten Aufnahmemodus, Erkennen eines Objekts in der Probe aus den ersten lichtmikroskopischen Daten und Zuordnen des Objekts zu einer Objektklasse mit einem ersten Künstliche-Intelligenz-Verfahren, Aufnehmen von zweiten lichtmikroskopischen Daten der Probe, insbesondere des erkannten Objekts, in einem zweiten Aufnahmemodus und Zuordnen des Objekts zu einer Unterkategorie der Objektklasse auf Basis der zweiten lichtmikroskopischen Daten mit dem ersten Künstliche-Intelligenz-Verfahren oder einem zweiten Künstliche-Intelligenz-Verfahren.

Die Objekte der Unterkategorie können z.B. ein interessierendes Zielmerkmal enthalten, d.h. die Unterkategorie kann durch das Vorhandensein des Zielmerkmals definiert sein. Beispielsweise kann die Objektklasse ein bestimmter Typ von biologischen Zellen sein und die Unterkategorie kann durch die Expression eines bestimmten Protein-Markers gekennzeichnet sein. Dieser Protein-Marker kann z.B. eine gewünschte Reaktion auf einen an einer Zellpopulation zu testenden Wirkstoff indizieren.

Alternativ ist es z. B. auch möglich, dass die Objektklasse ein bestimmter Typ von biologischen Zellen ist und die Unterkategorie ein Wachstumsstadium, z.B. "mitotisch" ist. Bei bestimmten Zelltypen sind solche Wachstumsstadien morphologisch sehr ähnlich, was zur zuverlässigen Unterscheidung z.B. eine zusätzliche Färbung erfordert, die etwa durch Detektion der Fluoreszenz (hier beispielsweise der zweite Aufnahmemodus) nachgewiesen werden kann. In einem nachgelagerten Schritt können dann die Objekte der Unterkategorie (etwa die mitotische Zellpopulation) auf weitere Merkmale (z.B. die Expression eines Marker-Proteins) untersucht werden, z.B. auf Basis einer weiteren Analyse der zweiten lichtmikroskopischen Daten oder durch eine Aufnahme weiterer lichtmikroskopischer Daten.

Durch die verschiedenen Aufnahmemodi ist somit eine Zuordnung von Objekten zu Unterkategorien möglich, was es ermöglicht, wesentlich komplexere automatische Screening-Aufgaben zu implementieren als mit nach dem Stand der Technik bekannten Verfahren. Dabei ist das erfindungsgemäße Verfahren insbesondere dadurch besonders effektiv, dass gezielt zweite lichtmikroskopische Daten von bereits auf Basis von ersten lichtmikroskopischen Daten erkannten Objekten, im dafür speziell ausgelegten zweiten Aufnahmemodus aufgenommen werden. Dies erspart durch die gezielte Analyse der Objekte eine erneute Abbildung des gesamten Probenbereichs und erhöht somit die Messgeschwindigkeit, insbesondere einer automatisierten Langzeitmessung, und vermindert potentiell schädigende Einflüsse auf die Probe.

Die Schritte des erfindungsgemäßen Verfahrens können nacheinander oder parallel zueinander durchgeführt werden. Insbesondere kann das Aufnehmen der zweiten lichtmikroskopischen Daten nach dem Erkennen des Objekts durchgeführt werden, wobei weiter insbesondere nur das erkannte Objekt oder ein Bereich um das auf Basis der ersten lichtmikroskopischen Daten erkannte Objekt herum abgebildet oder aufgrund einer Lokalisierung dargestellt wird. Dies ist z.B. dann vorteilhaft, wenn lichtmikroskopische Aufnahmen im zweiten Aufnahmemodus eine lange Aufnahmezeit erfordern und/oder die Probe schädigen können (was insbesondere notwendig sein kann, um eine höhere Auflösung zu erzielen). Alternativ können die ersten lichtmikroskopischen Daten und die zweiten lichtmikroskopischen Daten der Probe gleichzeitig oder kurz hintereinander erfasst werden und das Erkennen des Objekts auf Basis der ersten lichtmikroskopischen Daten sowie das Zuordnen zu der Unterkategorie auf Basis der zweiten lichtmikroskopischen Daten kann nach Abschluss der Datenaufnahme durchgeführt werden. Dies ist beispielsweise möglich, wenn der erste und der zweite Aufnahmemodus eine spektral getrennte Erfassung von Lumineszenzlicht von zwei unterschiedlichen Lumineszenzfarbstoffen umfassen.

Der Begriff "lichtmikroskopische Daten" umfasst im Zusammenhang der vorliegenden Spezifikation insbesondere Bilddaten und Lokalisationsdaten. Im Gegensatz zu Bilddaten, die durch eine optische Abbildung eines Teils der Probe, insbesondere durch Weitfeldmikroskopie oder Scanning-Mikroskopie, zustande kommen, umfassen Lokalisationsdaten geschätzte Positionen einzelner Emitter (z.B. Fluorophore, Quantum Dots, reflektierende Nanopartikel o.ä.) in der Probe. Solche Lokalisationsdaten können in Form einer Lokalisationskarte der Positionen mehrerer in verschiedenen Lokalisationsschritten lokalisierter Emitter dargestellt werden, die einem klassischen mikroskopischen Bild gleicht. Bekannte lokalisationsmikroskopische Verfahren sind z.B. PALM/STORM und verwandte Methoden sowie MINFLUX. Bei den lichtmikroskopischen Daten kann es sich auch um Bilddaten oder Lokalisationsdaten einer Serie von Bildern handeln, z.B. einer sogenannten *time-lapse*-Aufnahme oder eines axialen Stapels von Bildern (sog. *z-stack*)*.* Die lichtmikroskopischen Daten können in einem oder mehreren Kanälen in geeigneten Dateiformaten z.B. als Grauwerte oder Farbwerte kodiert sein.

Der erste Aufnahmemodus und der zweite Aufnahmemodus unterscheiden sich durch lichtmikroskopische Parameter voneinander und können, müssen aber nicht dasselbe Bildgebungs- bzw. Lokalisationsprinzip verwenden. Beispielsweise ist es möglich, dass sowohl in dem ersten Aufnahmemodus als auch in dem zweiten Aufnahmemodus die Probe mittels konfokaler Scanning-Mikroskopie abgebildet wird, wobei sich Scan-Parameter zwischen dem ersten Aufnahmemodus und dem zweiten Aufnahmemodus voneinander unterscheiden, z.B. die *pixel dwell time* oder die Scangeschwindigkeit. Es könnte auch in dem ersten Aufnahmemodus ein konfokales Scanning-2D-Bild der Probe aufgenommen werden und ein konfokales Scanning-3D-Bild im zweiten Aufnahmemodus. Ein Bespiel für unterschiedliche Bildgebungsprinzipien wäre ein Weitfeldfluoreszenzbild (Weitfeldbeleuchtung, ortsauflösender Detektor) im ersten Aufnahmemodus und ein konfokales Laserscanning-Bild im zweiten Aufnahmemodus.

Gemäß einer Ausführungsform des Verfahrens beruhen der erste Aufnahmemodus und der zweite Aufnahmemodus auf unterschiedlichen Bildgebungs- oder Lokalisationsprinzipien.

Gemäß einer weiteren Ausführungsform werden die zweiten lichtmikroskopischen Daten in dem zweiten Aufnahmemodus schneller aufgenommen als die ersten lichtmikroskopischen Daten in dem ersten Aufnahmemodus. Dies erhöht insbesondere die Geschwindigkeit eines automatischen Screening-Prozesses, da mit dem langsameren Aufnahmemodus statt der gesamten Probe nur gezielt einzelne Objekte analysiert werden.

Das Erkennen des Objekts und das Zuordnen des Objekts zu der Objektklasse können nacheinander oder in einem Schritt durchgeführt werden. Der Begriff "Erkennen des Objekts" kann auch ein semantisches Segmentieren, ein Instanzen-Segmentieren und/oder eine sogenannte Lokalisierung (d.h. eine Positionsbestimmung in einem Bildausschnitt) des Objekts umfassen. Wenn zwei getrennte Schritte durchgeführt werden, könnte z.B. ein spezialisiertes erstes Künstliche-Intelligenz-Verfahren eine Segmentierung eines Bildes durchführen und ein spezialisiertes zweites Künstliche-Intelligenz-Verfahren könnte erkannten Segmenten Objektklassen zuordnen. Es ist aber z.B. auch möglich, dass ein einziges Künstliche-Intelligenz-Verfahren eine gekoppelte Erkennung/Klassifizierung durchführt. Das erste Künstliche-Intelligenz-Verfahren und das zweite Künstliche-Intelligenz-Verfahren umfassen insbesondere einen Künstliche-Intelligenz-Algorithmus. Dabei wird insbesondere ein trainiertes Datenverarbeitungsnetz wie z.B. eine *support vector maschine,* ein künstliches neuronales Netz oder ein *multilayer perceptron* verwendet.

Gemäß einer Ausführungsform umfasst das Verfahren weiterhin ein automatisches Erkennen eines Zielmerkmals in den Objekten der Unterkategorie, insbesondere unter Verwendung der ersten lichtmikroskopischen Daten, der zweiten lichtmikroskopischen Daten und/oder dritter lichtmikroskopischer Daten. Die dritten lichtmikroskopischen Daten können in dem ersten Aufnahmemodus, dem zweiten Aufnahmemodus oder einem dritten Aufnahmemodus aufgenommen werden. Das Erkennen des Zielmerkmals kann insbesondere mit dem ersten Künstliche-Intelligenz-Verfahren, dem zweiten Künstliche-Intelligenz-Verfahren oder einem dritten Künstliche-Intelligenz-Verfahren erfolgen. Ein Beispiel eines Zielmerkmals ist die Expression eines Marker-Proteins in einer biologischen Zelle, die z.B. durch Kopplung des Marker-Proteins an einen Fluorophor, Anregung des Fluorophors und Detektion der Fluoreszenz nachgewiesen werden kann.

Gemäß einer Ausführungsform des Verfahrens werden die ersten lichtmikroskopischen Daten in dem ersten Aufnahmemodus in einem ersten Farbkanal aufgenommen, wobei die zweiten lichtmikroskopischen Daten in dem zweiten Aufnahmemodus in einem zweiten Farbkanal aufgenommen werden, der sich von dem ersten Farbkanal unterscheidet. Beispielsweise können in dem ersten Farbkanal und dem zweiten Farbkanal unterschiedliche Färbungen bzw. Markierungen mit Fluorophoren einer biologischen Zelle detektiert werden, z.B. eine Zellkernfärbung (etwa mit dem Farbstoff DAPI) und eine Markierung eines bestimmten zytosolischen Proteins durch Kopplung eines Fluorophors über einen spezifischen Antikörper.

Gemäß einer weiteren Ausführungsform werden die ersten lichtmikroskopischen Daten in dem ersten Aufnahmemodus mit einer ersten Auflösung aufgenommen, wobei die zweiten lichtmikroskopischen Daten in dem zweiten Aufnahmemodus mit einer zweiten Auflösung aufgenommen werden, die höher ist als die erste Auflösung. Dabei werden insbesondere die zweiten lichtmikroskopischen Daten in dem zweiten Aufnahmemodus schneller aufgenommen als die ersten lichtmikroskopischen Daten in dem ersten Aufnahmemodus.

Der Begriff "Auflösung" wird dabei als kleinster Abstand zwischen zwei punktförmigen Objekten mit einem Durchmesser, der kleiner als die Beugungsgrenze ist, verstanden, bei dem die zwei Objekte mit dem gegebenen Bildgebungs- oder Lokalisierungsverfahren getrennt dargestellt werden können. Eine höhere Auflösung entspricht dabei einem kleineren Abstand, also einer besseren Trennfähigkeit des Bildgebungs- oder Lokalisierungsverfahrens.

Durch eine Erhöhung der Auflösung im zweiten Aufnahmemodus lassen sich z.B. kleinere Strukturen innerhalb der Objekte in der Probe sichtbar machen, was z.B. notwendig sein kann, wenn ein zu erkennendes Zielmerkmal eine bestimmte Lokalisierung eines Farbstoffs oder Fluoreszenzmarkers innerhalb einer biologischen Zelle ist. Die Steigerung der Auflösung kann z.B. durch verschiedene Bildgebungs- bzw. Lokalisierungsprinzipien in dem ersten und dem zweiten Aufnahmemodus erreicht werden. So ergibt z.B. eine konfokale Laserscanning-Aufnahme (zweiter Aufnahmemodus) im Vergleich zu einem Weitfeld-Fluoreszenzbild (erster Aufnahmemodus) durch das *optical sectioning* eine gesteigerte axiale Auflösung und abhängig von der Öffnung der Lochblende ggf. auch eine gesteigerte laterale Auflösung.

Weiterhin kann die Auflösung im zweiten Aufnahmemodus z.B. auch durch STED-Mikroskopie erhöht werden, also durch Erzeugung einer STED-Lichtverteilung mit einer zentralen Intensitätsnullstelle am geometrischen Fokus zur Depletion des angeregten Zustands der Fluorophore in den Bereichen um die Nullstelle herum. Da die STED-Mikroskopie üblicherweise durch Scannen der Probe mit dem kombinierten Anregungs- und STED-Fokus durchgeführt wird, ist es bei solchen Ausführungsformen zweckmäßig, wenn im ersten Aufnahmemodus ein konfokales Laserscanning-Bild (ohne STED-Licht) aufgenommen wird. Alternativ kann sowohl im ersten als auch im zweiten Aufnahmemodus ein STED- Bild aufgenommen werden, wobei die STED-Intensität bzw. STED-Leistung im zweiten Aufnahmemodus höher ist als im ersten Aufnahmemodus. Hierdurch wird im zweiten Aufnahmemodus eine schmalere effektive Punktspreizfunktion des Detektionslichts erreicht, was in einer Steigerung der Auflösung resultiert.

Gemäß einer weiteren Ausführungsform wird in dem zweiten Aufnahmemodus ein superauflösendes Lichtmikroskopie-Verfahren, insbesondere ein STED-Mikroskopie-Verfahren, ein RESOLFT-Mikroskopie-Verfahren, ein MINFLUX-Verfahren, ein STED-MINFLUX-Verfahren, ein PALM/STORM-Verfahren, ein SIM-Verfahren oder ein SIMFLUX-Verfahren, durchgeführt.

Unter einem superauflösenden Lichtmikroskopie-Verfahren wird dabei ein Verfahren verstanden, das (unter geeigneten Randbedingungen) dazu geeignet ist, eine Auflösung unterhalb der Beugungsgrenze zu erreichen. Die Beugungsgrenze ist dabei für die laterale Auflösung insbesondere durch das Abbe-Kriterium oder Rayleigh-Kriterium gegeben.

Wie bereits oben beschrieben wird bei der STED-Mikroskopie eine Lichtverteilung von STED-Licht mit einem zentralen lokalen Intensitätsminimum mit fokussiertem Anregungslicht überlagert. Fluorophore um das Minimum herum werden von dem STED-Licht durch stimulierte Emissionsdepletion aus dem angeregten Zustand in den Grundzustand zurückversetzt, so dass die Fluoreszenz nur aus einem sehr eng begrenzten Bereich um das Minimum stammt. Hierdurch wird die Auflösung verbessert.

Bei der RESOLFT-Mikroskopie wird dasselbe Konzept mit einer Lichtverteilung von Schaltlicht umgesetzt, das schaltbare Fluorophore in dem Bereich um das Minimum herum in einen nichtfluoreszierenden Zustand versetzt.

Die MINFLUX-Mikroskopie ist ein lichtmikroskopisches Verfahren zur Lokalisation oder zum Verfolgen einzelner Emitter in einer Probe mit einer Auflösung im niedrigen Nanometerbereich. Bei dem Verfahren wird die Probe mit einer Anregungslichtverteilung mit lokalem Minimum an unterschiedlichen Positionen belichtet und für jede Position wird eine Photonenemissionsrate bestimmt. Aus den Photonenraten und den zugehörigen Positionen wird dann mit einem Positionsschätzer eine Position des einzelnen Emitters geschätzt. Dieser Prozess kann iterativ fortgesetzt werden, indem das lokale Minimum der Lichtverteilung an zunehmend enger um die zuvor geschätzte Position angeordneten Positionen platziert wird und die Lichtintensität sukzessive erhöht wird. Dieses Verfahren zeichnet sich durch eine sehr hohe Positionsgenauigkeit und Photoneneffizienz aus.

Bei einer Variante des MINFLUX-Verfahrens, die hier als STED-MINFLUX bezeichnet wird, wird die Probe mit einer Kombination eines regulären (näherungsweise gaußförmigen) Anregungsfokus und einer STED-Lichtverteilung mit lokalem Minimum belichtet, wobei ebenfalls für jede Position eine Photonenemissionsrate bestimmt wird und aus den Positionen und den zugehörigen Photonenemissionsraten die Position eines einzelnen Emitters geschätzt wird. Eine ähnliche Methode ist unter der Bezeichnung MINSTED bekannt.

Unter dem Begriff PALM/STORM-Verfahren wird hier eine Reihe von Lokalisationsverfahren für einzelne Emitter in einer Probe zusammengefasst. Diese Verfahren zeichnen sich dadurch aus, dass eine Lokalisierungskarte mehrerer Emitter mit einer höheren Auflösung als die Beugungsgrenze rechnerisch ermittelt wird, wobei ausgenutzt wird, dass die Emitter, insbesondere periodisch, zwischen einem zur Fluoreszenz anregbaren Zustand und einem nichtanregbaren Dunkelzustand hin und her wechseln. Bei den Methoden PALM, STORM und dSTORM und verwandten Verfahren werden mittels einer hochauflösenden Kamera mehrere Weitfeld-Fluoreszenzbilder über einen Zeitraum aufgenommen, in dem zumindest einige der Emitter den Zustand wechseln. Die Lokalisierungskarte wird dann auf Basis der gesamten Zeitreihe errechnet, wobei die Emitterpositionen jeweils durch Zentroidbestimmung der Abbildung der Detektions-PSF auf einem ortsauflösenden Detektor bestimmt werden. Die Probenbedingungen werden so eingestellt, dass der mittlere Abstand der Emitter im anregbaren Zustand oberhalb der Beugungsgrenze liegt, so dass die Punktspreizfunktionen der einzelnen Emitter zu jedem Zeitpunkt der Zeitreihe auf dem Detektor getrennt darstellbar sind.

Bei der SOFI-Technik, die hier ebenfalls zu den PALM/STORM-Verfahren gerechnet wird, werden die zeitlichen Autokorrelationsfunktionen von spontan blinkenden einzelnen Emittern ausgewertet, um eine Lokalisationskarte mit einer Auflösung unterhalb der Beugungsgrenze zu erhalten.

Bei der SIM-Technik wird eine Superauflösung durch Beleuchtung der Probe mit einer strukturierten Lichtverteilung erreicht.

Der Begriff "SIMFLUX-Verfahren" beschreibt ein z.B. in dem Artikel Cnossen J, Hinsdale T, Thorsen RØ, Siemons M, Schueder F, Jungmann R, Smith CS, Rieger B, Stallinga S. Localization microscopy at doubled precision with patterned illumination. Nat Methods. 2020 Jan;17(1):59-63. doi: 10.1038/s41592-019-0657-7. Epub 2019 Dec 9. PMID: 31819263; PMCID: PMC6989044 beschriebenes Einzelmolekül-Lokalisationsverfahren, bei der die Probe nacheinander mit zueinander orthogonalen periodischen Mustern von Anregungslicht mit unterschiedlichen Phasenverschiebungen beleuchtet wird. Aus den mit einem ortsauflösenden Detektor gemessenen Photonenzahlen werden Zentroid-Position von einzelnen Molekülen abgeschätzt.

Gemäß einer weiteren Ausführungsform wird in dem ersten Aufnahmemodus ein konfokales Rastermikroskopie-Verfahren oder ein Weitfeld-Lumineszenz-Mikroskopie-Verfahren durchgeführt.

Bei einem konfokalen Rastermikroskopie-Verfahren wird Anregungslicht in die Probe fokussiert und der Fokus relativ zur Probe verschoben, wobei das von Emittern in der Probe emittierte Licht (insbesondere reflektiertes Anregungslicht oder Fluoreszenzlicht) konfokal zur Fokusebene in der Probe erfasst wird. Dabei kann der Anregungslichtstrahl mit einem Strahlscanner über die ruhende Probe bewegt werden oder die Probe kann relativ zu dem ruhenden Lichtstrahl bewegt werden. Das Emissionslicht kann ebenfalls entscannt werden oder nicht entscannt detektiert werden.

Bei der Weitfeld-Lumineszenz-Mikroskopie wird die Probe in einem Bereich näherungsweise homogen mit Anregungslicht beleuchtet und von Emittern in der Probe ausgesendetes Lumineszenzlicht, insbesondere Fluoreszenzlicht, typischerweise mit einer Kamera detektiert. Im Kontext eines automatischen Screenings von Objekten hat die Weitfeld-Lumineszenz-Mikroskopie den Vorteil, dass ein relativ großer Probenausschnitt mit einer Vielzahl von zu analysierenden Objekten schnell erfasst werden kann.

Gemäß einer weiteren Ausführungsform werden die ersten lichtmikroskopischen Daten und die zweiten lichtmikroskopischen Daten mit derselben Vergrößerung, insbesondere mit demselben Objektiv, aufgenommen. Dies hat den Vorteil, dass die ersten lichtmikroskopischen Daten und die zweiten lichtmikroskopischen Daten gut vergleichbar sind, so dass eine Auswertung auf Basis einer Kombination der ersten und zweiten lichtmikroskopischen Daten leichter durchgeführt werden kann. Die Erfassung der ersten und zweiten lichtmikroskopischen Daten mit demselben Objektiv hat den Vorteil, dass bei der Erfassung einer Vielzahl von Bildern oder Lokalisationskarten kein Objektivwechsel notwendig ist, was die Aufnahmegeschwindigkeit stark erhöht.

Gemäß einer weiteren Ausführungsform wird das Verfahren automatisiert durchgeführt. Die automatische Erkennung und Klassifikation von Objekten in einer Probe eignet sich sehr gut z.B. für die automatisierte Analyse einer großen Zahl von Proben, so wie diese etwa beim Screening neuer pharmakologischer Wirkstoffkandidaten durchgeführt wird. Zu diesem Zweck wird insbesondere ein Steuergerät mit einem Lichtmikroskop gekoppelt, das einen Ablauf mehrerer lichtmikroskopischer Messungen und ggf. dazwischen durchgeführter Analysen durch einen Prozessor, durchführt. Zur Sicherstellung konstanter Umweltbedingungen kann die Probe hierfür z.B. in einem Inkubator platziert werden, insbesondere bei biologischen Proben wie lebenden Zellen.

Gemäß einer weiteren Ausführungsform wird das Verfahren wiederholt durchgeführt. Das heißt insbesondere, dass in einer Probe oder in mehreren Proben mehrmals nacheinander erste lichtmikroskopische Daten aufgenommen, Objekte automatisch erkannt sowie einer Kategorie zugeordnet, zweite lichtmikroskopische Daten aufgenommen und die Objekte automatisch einer Unterkategorie zugeordnet werden.

Gemäß einer weiteren Ausführungsform sind die zweiten lichtmikroskopischen Daten dreidimensionale lichtmikroskopische Daten, insbesondere wobei die ersten lichtmikroskopischen Daten zweidimensionale lichtmikroskopische Daten sind.

Gemäß einer weiteren Ausführungsform werden die zweiten lichtmikroskopischen Daten durch Aufnahme eines axialen Stapels von Bildern erzeugt.

Dreidimensionale Daten, insbesondere axiale Stapel von Bildern, erfordern eine relativ lange Aufnahmezeit, liefern aber zusätzliche Information über die abgebildeten Objekte. Daher ist es besonders vorteilhaft, zunächst eine Objekterkennung auf Basis der ersten lichtmikroskopischen Daten durchzuführen, bevor eine Bestimmung einer Unterkategorie auf Basis von dreidimensionalen Daten durchgeführt wird. Dabei kann die dreidimensionale Aufnahme auf bestimmte Probenbereiche mit dem im ersten Aufnahmemodus erkannten Objekten durchgeführt werden, was die Messzeit verringert und ggf. die Belastung der Probe verringert.

Gemäß einer weiteren Ausführungsform ist das erste Künstliche-Intelligenz-Verfahren ein Deep-Learning-Verfahren.

Gemäß einer weiteren Ausführungsform ist das zweite Künstliche-Intelligenz-Verfahren ein Deep-Learning-Verfahren.

Im Zusammenhang der vorliegenden Spezifikation bezeichnet der Begriff "Deep-Learning-Verfahren" ein Künstliche-Intelligenz-Verfahren, das Rohdaten (im Gegensatz zu maßgeschneiderten Merkmalsvektoren bei anderen Kl-Methoden) als Eingangsdaten verwendet, wobei Repräsentationen der Eingangsdaten in verschiedenen Schichten gebildet werden.

Gemäß einer weiteren Ausführungsform wird das erste Künstliche-Intelligenz-Verfahren mittels eines ersten trainierten Datenverarbeitungsnetztes, insbesondere eines künstlichen neuronalen Netzes, durchgeführt. Gemäß einer weiteren Ausführungsform wird das zweite Künstliche-Intelligenz-Verfahren mittels eines zweiten trainierten Datenverarbeitungsnetzes, insbesondere eines künstlichen neuronalen Netzes, durchgeführt.

Im Zusammenhang der vorliegenden Spezifikation bezeichnet der Begriff "künstliches neuronales Netz" ein Datenverarbeitungsnetz umfassend eine Mehrzahl an Knoten, die in einer Eingangsschicht, mindestens einer versteckten Schicht und einer Ausgangsschicht organisiert sind, wobei jeder Knoten Eingangsdaten mittels einer nichtlinearen Funktion in Ausgangsdaten umwandelt, und wobei zwischen der Eingangsschicht und einer versteckten Schicht, zwischen einer versteckten Schicht und der Ausgangsschicht sowie optional (für den Fall, dass mehrere versteckte Schichten vorgesehen sind) zwischen verschiedenen versteckten Schichten (zumindest implizit) Gewichte definiert sind, wobei die Gewichte Anteile angeben, mit denen die Ausgangsdaten eines jeweiligen Knotens als Eingangsdaten eines dem jeweiligen Knoten in einer Datenflussrichtung nachgelagerten Knoten berücksichtigt werden. Die Gewichte können insbesondere auch durch Faltungsmatrizen definiert sein.

Unter Definition "neuronales Netz" gemäß dieser Spezifikation fallen nicht nur sogenannte neuronale Faltungsnetze (engl. *convolutional neural networks,* die sich durch eine Faltungsoperation zwischen Faltungsschichten sowie durch Pooling-Schichten auszeichnen, die die Eingangsdaten in weniger Knoten zusammenfassen als die jeweils in Datenflussrichtung vorgelagerte Schicht), sondern insbesondere auch sog. *fully connected networks* oder *multilayer perceptrons* mit ausschließlich vollverbundenen Schichten, insbesondere gleicher Dimension.

Ein trainiertes neuronales Netz ist ein neuronales Netz, das durch Prozessierung von Trainingsdaten auf eine bestimmte Aufgabe angepasste Gewichte aufweist.

Gemäß einer weiteren Ausführungsform wird das erste Künstliche-Intelligenz-Verfahren und/oder das zweite Künstliche-Intelligenz-Verfahren mittels einer Benutzereingabe, insbesondere parallel zu der Durchführung des Verfahrens, trainiert. Durch die Benutzereingabe kann beispielsweise spezifiziert werden, ob eine durch das erste Künstliche-Intelligenz-Verfahren durchgeführte Erkennung und Klassifizierung eines Objekts korrekt ist und/oder ob eine durch das erste oder das zweite Künstliche-Intelligenzverfahren durchgeführte Bestimmung der Unterkategorie korrekt ist. Der Vorteil dieser Art von Verstärkungslernen ist, dass das erste Künstliche-Intelligenz-Verfahren und/oder das zweite Künstliche-Intelligenz-Verfahren während des Betriebs dazulernt, ohne dass weitere Trainingsdaten zur Verfügung gestellt werden müssen.

Gemäß einer weiteren Ausführungsform ist das Objekt eine biologische Einheit, insbesondere eine biologische Zelle, weiter insbesondere eine lebende Zelle, oder eine Organelle. Weitere biologische Einheiten können z.B. Organe, Gewebe oder Zellverbände, Viren, Bakteriophagen, Proteinkomplexe, Proteinaggregate, Ribosomen, Plasmide, Vesikel oder Ähnliches sein. Der Begriff "biologische Zelle" umfasst Zellen aller Domänen des Lebens, also Prokaryoten, Eukaryoten und Archaea. Lebende Zellen weisen insbesondere eine Teilungsaktivität und/oder eine Stoffwechselaktivität auf, die mit dem Fachmann bekannten Methoden nachweisbar sind. Der Begriff "Organellen" umfasst bekannte eukaryotische subzellulare Strukturen wie z.B. den Zellkern, den Golgi-Apparat, Lysosomen, das endoplasmatische Retikulum, aber auch Strukturen wie das bakterielle Chromosom.

Gemäß einer weiteren Ausführungsform beschreibt die Objektklasse einen Zelltyp, einen Organell-Typ, einen ersten Phänotyp oder ein Zellteilungsstadium.

Der Begriff "Phänotyp" ist im Kontext der vorliegenden Spezifikation allgemein als Merkmalsausprägung einer Zelle zu verstehen. Darin sind sowohl durch genetische Veränderungen ausgelöste Merkmalsausprägungen als auch beispielsweise durch Umwelteinflüsse oder Wirkstoffe bedingte Merkmalsausprägungen enthalten.

Gemäß einer weiteren Ausführungsform beschreibt die Unterkategorie einen zweiten Phänotyp, insbesondere einen durch einen der Probe zugesetzten Wirkstoff hervorgerufenen Phänotyp, eine Lokalisation von Komponenten (z.B. Proteinen) des Objekts (insbesondere der Zelle) oder ein Muster von Komponenten (z.B. Proteinen) des Objekts (insbesondere der Zelle). Durch Chemikalien hervorgerufene Phänotypen können insbesondere zum Auffinden neuer pharmakologischer Wirkstoffe im Rahmen eines Wirkstoff-Screenings verwendet werden.

Gemäß einer weiteren Ausführungsform beschreibt die Objektklasse einen seltenen und/oder transienten Zustand des Objekts, insbesondere der biologischen Zelle. Zur Erkennung solcher seltener oder transienter Zustände ist eine automatisierte Analyse besonders gut geeignet.

Gemäß einer weiteren Ausführungsform werden, insbesondere zwischen der Aufnahme der ersten lichtmikroskopischen Daten und der zweiten lichtmikroskopischen Daten, dritte dreidimensionale lichtmikroskopische Daten der Probe aufgenommen, wobei auf Basis der dritten lichtmikroskopischen Daten ein Teilbereich des erkannten Objekts, insbesondere automatisch, ausgewählt wird, und wobei die zweiten lichtmikroskopischen Daten von dem ausgewählten Teilbereich des erkannten Objekts aufgenommen werden. Durch eine solche schrittweise Datenaufnahme kann zunächst ein relevanter Teilbereich eines Objekts identifiziert werden, der mit hoher Wahrscheinlichkeit Informationen über die Unterkategorie enthält, zu der das Objekt gehört. Dies verbessert die Zuordnung der Unterkategorie im nächsten Schritt deutlich.

Die dritten lichtmikroskopischen Daten werden insbesondere in einem dritten Aufnahmemodus aufgenommen, der sich von dem ersten Aufnahmemodus und dem zweiten Aufnahmemodus unterscheidet. Die erreichbare Auflösung des dritten Aufnahmemodus kann insbesondere gleich der Auflösung des ersten Aufnahmemodus sein oder insbesondere zwischen der Auflösung des ersten Aufnahmemodus und des zweiten Aufnahmemodus liegen. Die dritten lichtmikroskopischen Daten können insbesondere gleich schnell oder langsamer aufgenommen werden als die ersten lichtmikroskopischen Daten. Insbesondere werden die dritten lichtmikroskopischen Daten schneller aufgenommen als die zweiten lichtmikroskopischen Daten.

Gemäß einer weiteren Ausführungsform werden die dritten lichtmikroskopischen Daten durch Aufnahme eines axialen Stapels von Bildern erzeugt. Dies ist insbesondere bei dickeren Objekten äußerst vorteilhaft, um die richtige Bildebene des Objekts zu finden, in der relevante Information, insbesondere über die Unterkategorie des Objekts, vorliegt.

Ein zweiter Aspekt der Erfindung betrifft eine Vorrichtung, insbesondere zur Durchführung des Verfahrens nach dem ersten Aspekt, aufweisend ein Lichtmikroskop, das dazu ausgebildet ist, erste lichtmikroskopische Daten einer Probe in einem ersten Aufnahmemodus aufzunehmen und zweite lichtmikroskopische Daten der Probe in einem zweiten Aufnahmemodus aufzunehmen, und einen Prozessor, der dazu ausgebildet ist, mit einem ersten Künstliche-Intelligenz-Verfahren ein Objekt in der Probe aus den ersten lichtmikroskopischen Daten zu erkennen und das Objekt einer Objektklasse zuzuordnen, wobei der Prozessor weiterhin dazu ausgebildet ist, das Objekt auf Basis der zweiten lichtmikroskopischen Daten mit dem ersten Künstliche-Intelligenz-Verfahren oder einem zweiten Künstliche-Intelligenz-Verfahren einer Unterkategorie der Objektklasse zuzuordnen.

Gemäß einer Ausführungsform weist die Vorrichtung und eine Steuereinheit auf, die dazu ausgebildet ist, das Lichtmikroskop zu veranlassen, in dem zweiten Aufnahmemodus die zweiten lichtmikroskopischen Daten, insbesondere des aus den ersten lichtmikroskopischen Daten erkannten Objekts, aufzunehmen.

Gemäß einer Ausführungsform weist die Vorrichtung eine Steuereinheit auf, die dazu ausgebildet ist, das Lichtmikroskop dazu zu veranlassen, eine Vielzahl von Datensätzen erster lichtmikroskopischer Daten und zweiter lichtmikroskopischer Daten der Probe oder einer Vielzahl von Proben aufzunehmen und den Prozessor dazu zu veranlassen, eine Vielzahl von Objekten zu erkennen, zu klassifizieren und ihnen eine Unterkategorie zuzuordnen.

Ein dritter Aspekt der Erfindung betrifft ein Computerprogrammprodukt aufweisend Befehle, die bewirken, dass die Vorrichtung nach dem zweiten Aspekt das Verfahren nach dem ersten Aspekt ausführt.

Weitere Ausführungsformen der Vorrichtung nach dem zweiten Aspekt und des Computerprogrammprodukts nach dem dritten Aspekt ergeben sich aus den weiter oben dargestellten Ausführungsformen des Verfahrens nach dem ersten Aspekt.

Vorteilhafte Weiterbildungen der Erfindung ergeben sich aus den Patentansprüchen, der Beschreibung und den Zeichnungen und den zugehörigen Erläuterungen zu den Zeichnungen. Die beschriebenen Vorteile von Merkmalen und / oder Merkmalskombinationen der Erfindung sind lediglich beispielhaft und können alternativ oder kumulativ zur Wirkung kommen.

Hinsichtlich des Offenbarungsgehalts (aber nicht des Schutzbereichs) der ursprünglichen Anmeldungsunterlagen und des Patents gilt Folgendes: Weitere Merkmale sind den Zeichnungen - insbesondere den dargestellten relativen Anordnungen und Wirkverbindungen - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen, was aber nicht für die unabhängigen Patentansprüche des erteilten Patents gilt.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

Im Folgenden werden Ausführungsbeispiele der Erfindung anhand der Figuren beschrieben. Diese beschränken nicht den Gegenstand dieser Offenbarung und den Schutzumfang.

### Kurzbeschreibung der Figuren

- Fig. 1: zeigt eine Anordnung von Objekten in einer Probe;
- Fig. 2: ist ein Flussdiagramm, das schematisch Schritte einer ersten Ausführungsform der Erfindung darstellt;
- Fig. 3: ist ein weiteres Flussdiagramm, das schematisch Schritte einer zweiten Ausführungsform der Erfindung darstellt;
- Fig. 4: zeigt schematisch ein Datenverarbeitungsnetz;
- Fig. 5: zeigt eine schematische Darstellung eines Ausführungsbeispiels einer Vorrichtung zur Durchführung des erfindungsgemäßen Verfahrens umfassend ein Lichtmikroskop und einen Prozessor;
- Fig. 6: zeigt eine schematische Darstellung eines Ausführungsbeispiels eines Prozessors zur Durchführung des erfindungsgemäßen Verfahrens.

### Beschreibung der Figuren

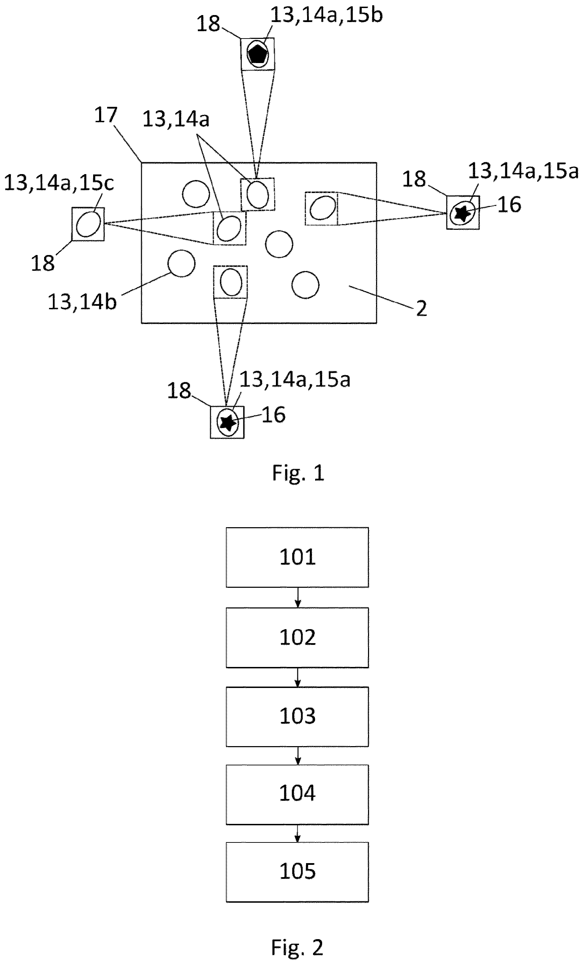

**Fig. 1** zeigt eine Anordnung von Objekten 13, insbesondere biologischen Zellen, in einer Probe 2 so wie sie in einem Übersichtsbild, das den ersten lichtmikroskopischen Daten 17 entspricht, erscheint. Die Objekte 13 werden im Rahmen des erfindungsgemäßen Verfahrens mit dem ersten Künstliche-Intelligenz-Verfahren einer von zwei Objektklassen 14a,14b zugeordnet. In dem in **Fig. 1** dargestellten Ausführungsbeispiel haben die Objekte 13 einer ersten Objektklasse 14a eine ovale Form und die Objekte 13 einer zweiten Objektklasse 14b haben eine runde Form.

Die Aufgabe eines Screening-Verfahrens besteht hier beispielsweise darin, die Objekte 13 der ersten Objektklasse 14a in Unterkategorien 15a, 15b, 15c einzuordnen, von denen eine erste Unterkategorie 15a ein Zielmerkmal 16 enthält. Das Zielmerkmal 16 kann z.B. eine bestimmte Lokalisation eines Fluoreszenz-Farbstoffs (auch als Marker bezeichnet) in dem Objekt 13 sein, z.B. eine intrazelluläre Lokalisation in einer biologischen Zelle. Im dargestellten Beispiel zeigen die Objekte 13 der ersten Unterkategorie 15a eine als Stern dargestellte Lokalisation des Markers, die dem Zielmerkmal 16 entspricht. Die Objekte 13 einer zweiten Unterkategorie 15b zeigen dagegen eine andere, als Fünfeck dargestellte, Lokalisation des Markers, während die Objekte 13 einer dritten Unterkategorie 15c den Marker nicht enthalten.

Um die Objekte 13 der ersten Objektklasse 14a automatisch den Unterkategorien 15a, 15b, 15c zuzuordnen, werden zweite lichtmikroskopische Daten 18 der entsprechenden Objekte 13 aufgenommen und die Klassifizierung wird mit dem ersten Künstliche-Intelligenz-Verfahren oder einem zweiten Künstliche-Intelligenz-Verfahren auf Basis der zweiten lichtmikroskopischen Daten 18 durchgeführt.

Die ersten lichtmikroskopischen Daten 17 können z.B. mit konfokaler Laserscanning-Mikroskopie oder Weitfeld-Fluoreszenzmikroskopie aufgenommen werden und die zweiten lichtmikroskopischen Daten 18 können z.B. mittels STED-Mikroskopie aufgenommen werden.

In **Fig. 2** ist der Ablauf des erfindungsgemäßen Verfahrens nach einer ersten Ausführungsform schematisch dargestellt.

In einem ersten Schritt 101 erfolgt das Aufnehmen von ersten lichtmikroskopischen Daten einer Probe 2 in einem ersten Aufnahmemodus. Der Schritt 102 umfasst das Erkennen eines Objekts 13 in der Probe 2 aus den ersten lichtmikroskopischen Daten 17. Das Objekt 13 wird in dem Schritt 103, der auch gemeinsam mit dem Schritt 102 durchgeführt werden kann, mit einem ersten Künstliche-Intelligenz-Verfahren einer Objektklasse 14a,14b zugeordnet. Anschließend werden in dem Schritt 104 zweite lichtmikroskopische Daten 18 des erkannten Objekts 13 in einem zweiten Aufnahmemodus aufgenommen. Schließlich wird das Objekt 13 in dem Schritt 105 mit dem ersten Künstliche-Intelligenz-Verfahren oder einem zweiten Künstliche-Intelligenz-Verfahren einer Unterkategorie 15a, 15b, 15c der Objektklasse 14a,14b zugeordnet.

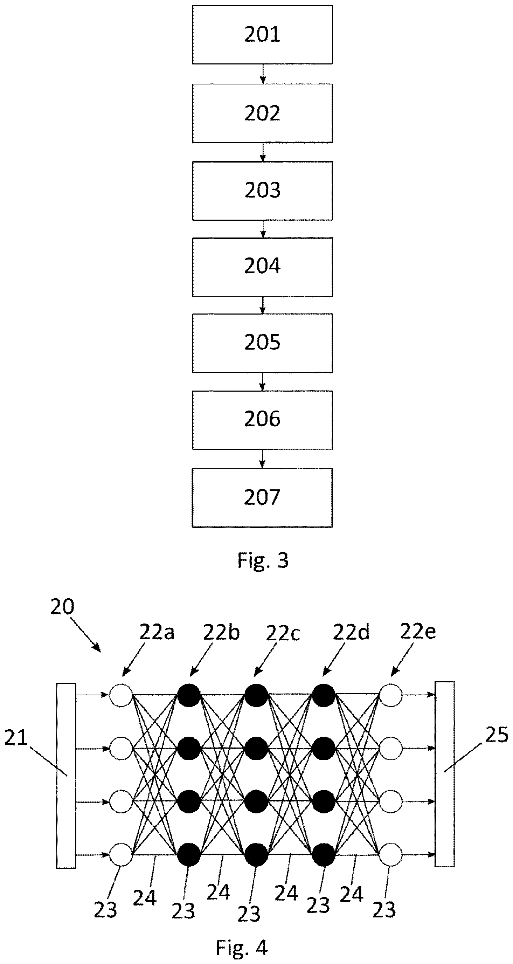

**Fig. 3** zeigt ein Ablaufschema einer weiteren, zweiten, Ausführungsform des erfindungsgemäßen Verfahrens.

Dabei werden zunächst in dem Schritt 201 erste lichtmikroskopische Daten 17 einer Probe 2 in einem ersten Aufnahmemodus aufgenommen, z.B. durch Aufnehmen eines Übersichtsbildes mittels konfokaler Laserscanning-Mikroskopie oder Weitfeld-Fluoreszenz-Mikroskopie.

Anschließend wird in dem Schritt 202 auf Basis der ersten lichtmikroskopischen Daten 17 von einem ersten Künstliche-Intelligenz-Verfahren, z.B. einem ersten trainierten künstlichen neuronalen Netz, ein Objekt 13 in der Probe 2 erkannt. Dies kann z.B. durch automatische Segmentierung des Übersichtsbildes in eine binäre Maske erfolgen. Anschließend wird das Objekt 13 in dem Schritt 203 mit einem ersten Künstliche-Intelligenz-Verfahren einer Objektklasse 14a,14b zugeordnet, d.h. es wird eine Klassifizierung durchgeführt, die mit der Objekterkennung gekoppelt sein kann.

Die Objekte 13 können z.B. biologische Zellen sein, die einen oder mehrere Fluoreszenzmarker (ein an interessierende Moleküle der Zelle gekoppelter Fluoreszenzfarbstoff) enthalten. In dem Übersichtsbild kann z.B. einer dieser Fluoreszenzmarker oder ein anderer Farbstoff nachgewiesen werden.

In dem Schritt 204 werden dann zunächst dritte, dreidimensionale, lichtmikroskopische Daten aufgenommen, z.B. durch Erstellen eines Stapels von Bildern verschiedener Fokusebenen in der Probe 2 (sogenannter *z-stack*)*.* Durch einen solchen Stapel kann z.B. nachgewiesen werden, in welcher Ebene eines dickeren Objekts 13 sich Fluoreszenzmarker befinden.

Auf Basis der dritten lichtmikroskopischen Daten wird in dem Schritt 205 ein Teilbereich des erkannten Objekts 13 ausgewählt, insbesondere mit dem ersten Künstliche-Intelligenz-Verfahren oder einem weiteren, dritten Künstliche-Intelligenz-Verfahren. Dabei kann z.B. ein trainiertes künstliches neuronales Netz ermitteln, in welchem axialen Teilbereich, also in welcher Schicht, des Objekts sich Fluoreszenzmarker, und somit interessierende Strukturen befinden.

In dem Schritt 206 werden dann zweite lichtmikroskopische Daten 18 von dem Teilbereich, insbesondere dem axialen Teilbereich, des erkannten Objekts 13 in einem zweiten Aufnahmemodus aufgenommen. Dabei kann z.B. eine superauflösende Lichtmikroskopie-Technik wie die STED-Mikroskopie eingesetzt werden, um die Lokalisation des FluoreszenzMarkers mit einer Auflösung unterhalb der Beugungsgrenze zu analysieren. Die zweiten lichtmikroskopischen Daten sind in diesem Fall z.B. ein STED-Bild aus einer Fokusebene, die auf Basis des in Schritt 204 erfassten *z-stacks* (dritte lichtmikroskopische Daten) ausgewählt wurde.

Der Schritt 207 umfasst schließlich das Zuordnen des Objekts 13 zu einer Unterkategorie 15a, 15b, 15c der Objektklasse 14a,14b auf Basis der zweiten lichtmikroskopischen Daten 18 mit dem ersten Künstliche-Intelligenz-Verfahren oder einem zweiten Künstliche-Intelligenz-Verfahren. Dabei kann optional ermittelt werden, ob das Objekt 13 ein Zielmerkmal 16 enthält.

In **Fig. 4** ist schematisch ein beispielhaftes Datenverarbeitungsnetz 20, insbesondere ein künstliches neuronales Netz, dargestellt, mit dem ein Künstliche-Intelligenz-Verfahren im Rahmen des erfindungsgemäßen Verfahrens durchgeführt werden kann. Das Datenverarbeitungsnetz 20 besteht aus Knoten 23, die in einer Eingangsschicht 22a, drei versteckten Schichten 22b,22c,22d sowie einer Ausgangsschicht 22e organisiert sind, und mittels Verbindungen 24 verbunden sind.

Die Eingangsschicht 22a erhält Eingangsdaten 21, z.B. lichtmikroskopische Daten. Jeder Knoten 23 wendet auf die Eingangsdaten 21 eine nichtlineare Funktion an, wobei das Ergebnis der Rechenoperation gemäß dem dargestellten Beispiel an die Knoten 23 der in Datenflussrichtung nachgelagerten ersten versteckten Schicht 22b weitergegeben wird. Die Knoten dieser Schicht 22b wenden wiederum eine nichtlineare Funktion auf diese weitergegebenen Daten an und leiten die Ergebnisse an die Knoten 23 der zweiten versteckten Schicht 22c weiter. Nach weiteren Rechenoperationen durch die dritte versteckte Schicht 22d und die Ausgangsschicht 22e geben die Knoten 23 der Ausgangsschicht 22e Ausgangsdaten 25 aus, z.B. eine binäre Maske, welche eine Segmentierung der lichtmikroskopischen Daten repräsentiert.

Auch wenn zur besseren Übersicht in **Fig. 4** nur drei versteckte Schichten 22b,22c,22d dargestellt sind, enthalten echte Datenverarbeitungsnetze 20 üblicherweise deutlich mehr versteckte Schichten 22b,22c,22d, beispielsweise hunderte bis tausende.

Für jede der Verbindungen 24 zwischen den Knoten 23 benachbarter Schichten 22a,22b,22c,22d,22e sind insbesondere Gewichte definiert, welche den Anteil der Ausgabe eines Knotens 23 an der Eingabe des in Datenflussrichtung nachgelagerten Knotens 23 angibt.

Ein solches Datenverarbeitungsnetz 20 kann z.B. auf die Segmentierung und Klassifizierung von Bilddaten trainiert werden, indem Trainingsdaten von dem Datenverarbeitungsnetz 20 verarbeitet werden, z.B. Bilddaten von Objekten 13 verschiedener Kategorien. Diese Bilddaten können mit dem Datenverarbeitungsnetz 20 verarbeitet werden, wobei auf das Ergebnis eine Fehlerfunktion angewendet wird, deren Wert die Übereinstimmung des ermittelten Ergebnisses mit dem korrekten Ergebnis widerspiegelt, d.h. hier liefert die Fehlerfunktion beispielsweise einen hohen Wert, wenn das Datenverarbeitungsnetz 20 ein Objekt 13 einer ersten Objektklasse 14a zuordnet, obwohl das Objekt 13 tatsächlich zu einer zweiten Objektklasse 14b gehört. Auf Basis der Ergebnisse der Fehlerfunktion werden dann die Gewichte an den Verbindungen 24 zwischen den Knoten 23 angepasst, z.B. mit einer sogenannten Rückpropagation, wobei für jedes Gewicht ein Gradient der Fehlerfunktion ermittelt wird, und die Gewichte auf Basis des steilsten Verlaufs des Gradienten angepasst werden.

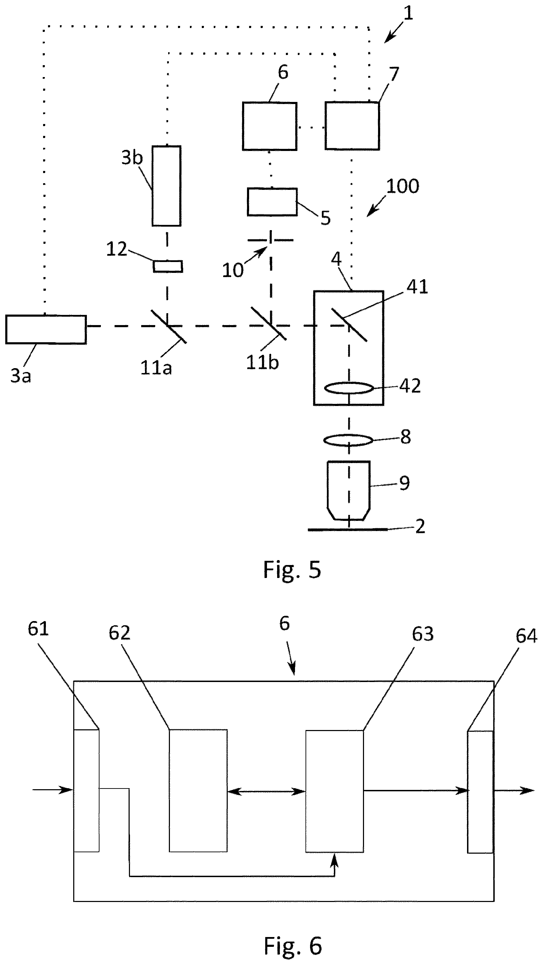

**Fig. 5** zeigt ein Ausführungsbeispiel einer Vorrichtung 1 zur Durchführung des erfindungsgemäßen Verfahrens umfassend ein Lichtmikroskop 100 und einen Prozessor 6.

Das Lichtmikroskop 100 weist eine erste Lichtquelle 3a zur Erzeugung eines Anregungslichtstrahls und eine zweite Lichtquelle 3b zur Erzeugung eines Verhinderungslichtstrahls, insbesondere eines STED-Lichtstrahls auf. Das Verhinderungslicht durchläuft einen Lichtmodulator 12, der die Phase und/oder die Amplitude des Verhinderungslichts moduliert, um an einem gemeinsamen Fokus des Anregungslichts und des Verhinderungslichts in einer Probe 2 eine Lichtverteilung des Verhinderungslichts mit einem lokalen Intensitätsminimum zu erzeugen. Auf diese Weise kann nach dem Prinzip der STED-Mikroskopie die Auflösung verbessert werden. Das Anregungslicht und das Verhinderungslicht werden an einem ersten Strahlteiler 11a in einen gemeinsamen Strahlengang eingekoppelt. Das kombinierte Anregungslicht und Verhinderungslicht durchläuft einen zweiten Strahlteiler 11b, der von der Probe 2 emittiertes Licht, insbesondere Fluoreszenzlicht, über eine konfokale Lochblende 10 zu einem Detektor 5 ablenkt, und anschließend einen Scanner 4 mit einem Scanspiegel 41 und einer Scanlinse 42, wobei der Scanner 4 den kombinierten Lichtstrahl lateral verlagert und somit über die Probe scannt. In **Fig. 5** ist zur besseren Übersicht nur ein Scanspiegel 41 gezeigt, obwohl xy-Strahlscanner insbesondere mindestens zwei Spiegel aufweisen. Anschließend gelangt der kombinierte Lichtstrahl über eine Tubuslinse 8 zu einem Objektiv 9, das den Lichtstrahl in die Probe 2 fokussiert, um Emitter in einem Bereich, der kleinere Abmessungen als die Beugungsgrenze hat, anzuregen. Das von den angeregten Emittern ausgesendete Fluoreszenzlicht wird von dem Objektiv 9 gesammelt, von dem Scanner 4 entscannt, von dem zweiten Strahlteiler 11b reflektiert und von dem konfokalen Detektor 5 erfasst. Die Signale des Detektors 5 werden von einem Prozessor 6 ausgewertet, wobei von dem Prozessor 6 auf Basis der für verschiedene Scanpunkte gemessenen Lichtintensitäten ein Bild erstellt werden kann. Das Mikroskop 100 verfügt weiterhin über eine mit dem Detektor 5, dem Scanner 4, der ersten Lichtquelle 3a und der zweiten Lichtquelle 3b und optional weiteren Komponenten verbundenen Steuereinheit 7.

Der Prozessor 6 ist schematisch in **Fig. 6** dargestellt. Er weist einen Dateneingang 61, eine Recheneinheit 62, eine Speichereinheit 63 und einen Datenausgang 64 auf. In der Speichereinheit 63 können Informationen gespeichert sein, die ein Künstliche-Intelligenz-Verfahren implementieren, indem die Recheneinheit 62 entsprechende Rechenoperationen ausführt. Dabei kann z.B. ein trainiertes künstliches neuronales Netz mit entsprechenden Gewichten für die Verbindungen 24 zwischen Knoten 23 (siehe Fig. 4) in der Speichereinheit 63 gespeichert sein. Über den Dateneingang 61 kann der Prozessor 6 lichtmikroskopische Daten erhalten, die dann von der Recheneinheit 62 gemäß dem gespeicherten trainierten künstlichen neuronalen Netz in Ausgabedaten umgerechnet werden, diese können über den Datenausgang 64 ausgegeben und z.B. von einer Anzeigeeinheit (nicht dargestellt) angezeigt werden, etwa als binäre Maske, welche die in den lichtmikroskopischen Daten erkannten Objekte 13 repräsentiert. Alternativ oder zusätzlich dazu können die Ausgabedaten in der Speichereinheit 63 oder einer separaten Speichereinheit gespeichert werden.

Die in **Fig. 6** dargestellten Komponenten können auf Hardware- oder Softwareebene implementiert sein. Weiterhin können der Dateneingang 61 und der Datenausgang 64 optional in einer bidirektionalen Datenschnittstelle kombiniert sein.

Der Prozessor 6 kann z.B. ein Computer (insbesondere ein Mehrzweckrechner, eine grafische Prozessoreinheit, ein FPGA, *field programmable gate array,* oder ein ASICS, *application specific integrated circuit),* eine elektronische Kontrolleinheit oder ein eingebettetes System sein. Die Speichereinheit 63 speichert Befehle, die bei einer Ausführung durch die Recheneinheit 62 bewirken, dass die erfindungsgemäße Vorrichtung 1 bzw. das Lichtmikroskop 100 das erfindungsgemäße Verfahren ausführt. Die gespeicherten Befehle bilden daher ein durch die Recheneinheit 62 ausführbares Programm, um die hierein beschriebenen Verfahren, insbesondere die Künstliche-Intelligenz-Verfahren oder Künstliche-Intelligenz-Algorithmen durchzuführen.

### Bezugszeichenliste

- 1: Vorrichtung
- 2: Probe
- 3a: Erste Lichtquelle
- 3b: Zweite Lichtquelle
- 4: Scanner
- 5: Detektor
- 6: Prozessor
- 7: Steuereinheit
- 8: Tubuslinse
- 9: Objektiv
- 10: Lochblende
- 11a: Erster Strahlteiler
- 11b: Zweiter Strahlteiler
- 12: Lichtmodulator
- 13: Objekt
- 14a, 14b: Objektklasse
- 15a, 15b, 15c: Unterkategorie
- 16: Zielmerkmal
- 17: Erste lichtmikroskopische Daten
- 18: Zweite lichtmikroskopische Daten
- 20: Datenverarbeitungsnetz
- 21: Eingangsdaten
- 22a: Eingangsschicht
- 22b,22c,22d: Versteckte Schicht
- 22e: Ausgangsschicht
- 23: Knoten
- 24: Verbindung
- 25: Ausgangsdaten
- 41: Scanspiegel
- 42: Scanlinse
- 61: Dateneingang
- 62: Recheneinheit
- 63: Speichereinheit
- 64: Datenausgang
- 100: Lichtmikroskop

## Patentansprüche

1. Lichtmikroskopisches Verfahren, umfassend die Schritte:
- Aufnehmen von ersten lichtmikroskopischen Daten (17) einer Probe (2) in einem ersten Aufnahmemodus,
- Erkennen eines Objekts (13) in der Probe (2) aus den ersten lichtmikroskopischen Daten (17) und Zuordnen des Objekts (13) zu einer Objektklasse (14a,14b) mit einem ersten Künstliche-Intelligenz-Verfahren,
- Aufnehmen von zweiten lichtmikroskopischen Daten (18) der Probe (2), insbesondere des erkannten Objekts (13), in einem zweiten Aufnahmemodus,
- Zuordnen des Objekts (13) zu einer Unterkategorie (15a, 15b, 15c) der Objektklasse (14a, 14b) auf Basis der zweiten lichtmikroskopischen Daten (18) mit dem ersten Künstliche-Intelligenz-Verfahren oder einem zweiten Künstliche-Intelligenz-Verfahren.

2. Verfahren nach Anspruch 1, **dadurch gekennzeichnet, dass** die ersten lichtmikroskopischen Daten (17) in dem ersten Aufnahmemodus in einem ersten Farbkanal aufgenommen werden und dass die zweiten lichtmikroskopischen Daten (18) in dem zweiten Aufnahmemodus in einem zweiten Farbkanal aufgenommen werden, der sich von dem ersten Farbkanal unterscheidet.

3. Verfahren nach Anspruch 1 oder 2, **dadurch gekennzeichnet, dass** die ersten lichtmikroskopischen Daten (17) in dem ersten Aufnahmemodus mit einer ersten Auflösung aufgenommen werden und dass die zweiten lichtmikroskopischen Daten (18) in dem zweiten Aufnahmemodus mit einer zweiten Auflösung aufgenommen werden, die höher ist als die erste Auflösung.

4. Verfahren nach Anspruch 3, **dadurch gekennzeichnet, dass** in dem zweiten Aufnahmemodus ein superauflösendes Lichtmikroskopie-Verfahren, insbesondere ein STED-Mikroskopie-Verfahren, ein RESOLFT-Mikroskopie-Verfahren, ein MINFLUX-Verfahren, ein STED-MINFLUX-Verfahren, ein PALM/STORM-Verfahren, ein SIM-Verfahren oder ein SIMFLUX-Verfahren, durchgeführt wird, insbesondere wobei in dem ersten Aufnahmemodus ein konfokales Rastermikroskopie-Verfahren oder ein Weitfeld-Lumineszenz-Mikroskopie-Verfahren, durchgeführt wird.

5. Verfahren nach einem der vorhergehenden Ansprüche, **dadurch gekennzeichnet, dass** die ersten lichtmikroskopischen Daten (17) und die zweiten lichtmikroskopischen Daten (18) mit derselben Vergrößerung, insbesondere mit demselben Objektiv (9), aufgenommen werden.

6. Verfahren nach einem der vorhergehenden Ansprüche, **dadurch gekennzeichnet, dass** die zweiten lichtmikroskopischen Daten dreidimensionale lichtmikroskopische Daten sind, insbesondere wobei die zweiten lichtmikroskopischen Daten durch Aufnahme eines axialen Stapels von Bildern erzeugt werden.

7. Verfahren nach einem der vorhergehenden Ansprüche, **dadurch gekennzeichnet, dass** das erste Künstliche-Intelligenz-Verfahren ein Deep-Learning-Verfahren ist, insbesondere wobei das erste Künstliche-Intelligenz-Verfahren mittels eines ersten trainierten Datenverarbeitungsnetzes (20) durchgeführt wird, und/oder dass das zweite Künstliche-Intelligenz-Verfahren ein Deep-Learning-Verfahren ist, insbesondere wobei das zweite Künstliche-Intelligenz-Verfahren mittels eines zweiten trainierten Datenverarbeitungsnetzes (20) durchgeführt wird.

8. Verfahren nach einem der vorhergehenden Ansprüche, **dadurch gekennzeichnet, dass** das erste Künstliche-Intelligenz-Verfahren und/oder das zweite Künstliche-Intelligenz-Verfahren mittels einer Benutzereingabe, insbesondere parallel zu der Durchführung des Verfahrens, trainiert wird.

9. Verfahren nach einem der vorhergehenden Ansprüche, **dadurch gekennzeichnet, dass** das Objekt (13) eine biologische Einheit, insbesondere eine biologische Zelle, weiter insbesondere eine lebende Zelle, oder eine Organelle, ist.

10. Verfahren nach Anspruch 9, **dadurch gekennzeichnet, dass** die Objektklasse (14a, 14b) einen Zelltyp, einen Organell-Typ, einen ersten Phänotyp oder ein Zellteilungsstadium beschreibt.

11. Verfahren nach Anspruch 9 oder 10, **dadurch gekennzeichnet, dass** die Unterkategorie (15a, 15b, 15c) einen zweiten Phänotyp, insbesondere einen durch einen der Probe (2) zugesetzten Wirkstoff hervorgerufenen Phänotyp, eine Lokalisation von Komponenten des Objekts (13) oder ein Muster von Komponenten des Objekts (13) beschreibt.

12. Verfahren nach einem der vorhergehenden Ansprüche, **dadurch gekennzeichnet, dass** die Objektklasse (14a, 14b) einen seltenen und/oder transienten Zustand des Objekts (13), insbesondere der biologischen Zelle, beschreibt.

13. Verfahren nach einem der vorhergehenden Ansprüche, **dadurch gekennzeichnet, dass** zwischen der Aufnahme der ersten lichtmikroskopischen Daten (17) und der zweiten lichtmikroskopischen Daten (18) dritte dreidimensionale lichtmikroskopische Daten der Probe aufgenommen werden, insbesondere in einem dritten Aufnahmemodus, wobei auf Basis der dritten lichtmikroskopischen Daten ein Teilbereich des erkannten Objekts (13), insbesondere automatisch, ausgewählt wird, und wobei die zweiten lichtmikroskopischen Daten (18) von dem ausgewählten Teilbereich des Objekts (13) aufgenommen werden, insbesondere wobei die dritten lichtmikroskopischen Daten durch Aufnahme eines axialen Stapels von Bildern erzeugt werden.

14. Vorrichtung (1), insbesondere zur Durchführung des Verfahrens nach einem der Ansprüche 1 bis 13, aufweisend
- ein Lichtmikroskop (100), das dazu ausgebildet ist, erste lichtmikroskopische Daten (17) einer Probe (2) in einem ersten Aufnahmemodus aufzunehmen und zweite lichtmikroskopische Daten (18) der Probe (2) in einem zweiten Aufnahmemodus aufzunehmen,
- einen Prozessor (6), der dazu ausgebildet ist, mit einem ersten Künstliche-Intelligenz-Verfahren ein Objekt (13) in der Probe (2) aus den ersten lichtmikroskopischen Daten (17) zu erkennen und das Objekt (13) einer Objektklasse (14a, 14b) zuzuordnen,
- wobei der Prozessor (6) weiterhin dazu ausgebildet ist, das Objekt (13) auf Basis der zweiten lichtmikroskopischen Daten (18) mit dem ersten Künstliche-Intelligenz-Verfahren oder einem zweiten Künstliche-Intelligenz-Verfahren einer Unterkategorie (15a, 15b, 15c) der Objektklasse (14a, 14b) zuzuordnen.

15. Computerprogrammprodukt aufweisend Befehle, die bewirken, dass die Vorrichtung (1) nach Anspruch 14 das Verfahren nach einem der Ansprüche 1 bis 13 ausführt.
